# FASCICULE DE BREVET EUROPEEN

(11) **EP 2 860 669 B1**
(45) Date de publication et mention de la délivrance du brevet: **25.11.2020**
(21) Numéro de dépôt: 14188000.5
(22) Date de dépôt: 07.10.2014
(51) Int. Cl.: G06K 19/073

(54) **Procédé mis en oeuvre dans un microcircuit et dispositif associé**
Verfahren in einem Mikroschaltkreis durgeführt und entsprechende Vorrichtung
Method implemented in a microcircuit and related device

(30) Priorité: 09.10.2013 FR 1359806
(43) Date de publication de la demande: 15.04.2015
(73) Titulaire: IDEMIA France, 92400 Courbevoie (FR)
(72) Inventeur: Chambley, Olivier, 92700 Colombes (FR); Barbu, Guillaume, 92700 Colombes (FR); Andouard, Philippe, 92700 Colombes (FR)
(74) Mandataire: Santarelli

(56) Documents cités:
- EP-B1- 2 164 031
- US-B1- 7 039 815

## Description

### DOMAINE DE L'INVENTION

L'invention concerne un procédé et un dispositif de protection d'un microcircuit. Elle s'applique, en particulier, à la protection des microcircuits contre des attaques, notamment les attaques par injection de fautes.

### CONTEXTE DE L'INVENTION

Afin d'améliorer la sécurité des données et programmes stockés dans des modules embarqués, par exemple des cartes à microcircuits, on cherche à se prémunir contre les divers types d'attaques envisageables.

Une catégorie importante d'attaques à contrecarrer est constituée par les attaques dites par injection de fautes (ou attaque par fautes), consistant à perturber physiquement le microcircuit, par exemple via un laser, afin de le faire dévier de son fonctionnement normal, et donc sécurisé.

A ce titre, aussi bien le fabricant que les développeurs d'applications pour ces microcircuits mettent en place des mécanismes de détection des attaques.

Par exemple, le fabricant peut inclure des détecteurs de conditions anormales d'alimentation (e.g. *glitches*) ou encore de lumière et les développeurs peuvent implémenter des contre-mesures consistant par exemple à vérifier l'intégrité des variables manipulées, ou encore tester la redondance des informations.

Lorsqu'une anomalie de sécurité est détectée, il est intéressant d'en garder une trace en mémoire. Typiquement, cette trace permet d'identifier l'origine de l'anomalie, et est sauvegardée dans une zone mémoire appelée zone d'écriture sécuritaire ou zone sécuritaire.

Lorsque certaines conditions sont remplies par le contenu de cette zone sécuritaire (généralement consultée à chaque démarrage de la carte), le microcircuit peut déclencher la mise en œuvre de fonctions de protection, ayant par exemple pour effet de supprimer les données et/ou programmes stockés dans le microcircuit, ou encore d'empêcher tout fonctionnement ultérieur de celui-ci.

En analysant la consommation de courant, un attaquant peut différencier une écriture en zone sécurisée d'une écriture « classique ». En effet, le nombre d'octets d'une trace (souvent 1 seul octet) est généralement inférieur au nombre d'octets écrits lors d'une écriture en fonctionnement normal (c'est-à-dire lorsqu'aucune attaque n'est détectée). Or, le nombre d'octets écrits influence directement la consommation, ce qui rend détectable l'écriture de la trace.

L'attaquant peut éviter la sauvegarde de cette trace, par exemple en coupant brusquement l'alimentation de la carte lorsque l'écriture de la trace est détectée.

Par ailleurs, des procédés de sécurisation connus, par exemple du document FR2935823, consistent à mettre en œuvre, alors le microcircuit ne détecte pas d'anomalie, des écritures leurres simulant l'écriture en zone sécuritaire.

Toutefois, ces fausses écritures impliquent un temps de traitement supplémentaire susceptible de ralentir le fonctionnement global de la carte à microcircuits.

### RESUME DE L'INVENTION

La présente invention a ainsi pour objet de pallier au moins un de ces inconvénients.

Dans ce contexte, un premier aspect de l'invention concerne un procédé mis en œuvre dans un microcircuit, comprenant :
- une étape de vérification du fonctionnement normal du microcircuit; et - en fonction du résultat de la vérification:
- lorsque le fonctionnement du circuit est normal, une étape d'écriture d'une première donnée à une première adresse;
- lorsque le fonctionnement du circuit est anormal, une étape d'écriture d'une deuxième donnée à une seconde adresse;
ledit procédé étant caractérisé en ce que ladite seconde adresse pointe vers une zone de mémoire dédiée du microcircuit, et ladite deuxième donnée est obtenue en substituant une partie de ladite première donnée qui serait écrite en fonctionnement normal par un identifiant du fonctionnement anormal.

Corrélativement, un deuxième aspect de l'invention concerne un dispositif dans un microcircuit, comprenant :
- un module de vérification du fonctionnement normal du microcircuit;
- un module d'écriture configuré pour, en fonction du résultat de la vérification par le module de vérification, écrire une première donnée à une première adresse lorsque le fonctionnement du circuit est normal, et écrire une deuxième donnée à une seconde adresse lorsque le fonctionnement du circuit est anormal;
ledit dispositif étant caractérisé en ce que ladite seconde adresse pointe vers une zone de mémoire dédiée du microcircuit, et ladite deuxième donnée est obtenue en substituant une partie de ladite première donnée qui serait écrite en fonctionnement normal par un identifiant du fonctionnement anormal.

Ainsi, en cas de fonctionnement anormal du circuit (c'est-à-dire par exemple lorsqu'une attaque est détectée), une écriture d'un mot ayant le même nombre d'octets que le mot qui serait écrit en fonctionnement normal, a quand même lieu et celle-ci permet en outre de garder une trace de ce fonctionnement anormal.

En effet, en cas de fonctionnement anormal du microcircuit, la donnée écrite lors de l'écriture comprend un identifiant spécifique, permettant ainsi de garder une trace de l'anomalie, qui plus est dans une zone dédiée du microcircuit (aussi appelée zone corbeille).

Puisqu'une écriture a lieu quel que soit l'état de fonctionnement du microcircuit, l'écriture de la trace précitée (i.e. de l'identifiant) est difficile à repérer pour l'attaquant.

D'autres caractéristiques du procédé et du dispositif selon des modes de réalisation de l'invention sont décrites dans les revendications dépendantes.

Les avantages, buts et caractéristiques particulières du dispositif sont similaires à ceux du procédé précité. En particulier, le dispositif comprend des modules configurés pour mettre en œuvre les différentes étapes du procédé précité.

Dans un mode particulier de réalisation de l'invention, ledit identifiant permet d'identifier un type d'anomalie.

Dans un mode particulier de réalisation de l'invention, si le microcircuit fonctionne normalement, ladite adresse pointe vers une zone de mémoire dite fonctionnelle, différente de ladite zone de mémoire dédiée.

Ainsi, cette zone dédiée ne contient des données que lorsqu'une anomalie de fonctionnement a été détectée, et elle est vierge sinon.

En variante, la zone dédiée peut être une sous-zone de la zone fonctionnelle.

Dans un mode particulier de réalisation de l'invention, la zone de mémoire dédiée et la zone de mémoire fonctionnelle appartiennent à des mémoires de même type.

Dans un mode particulier de réalisation de l'invention, la donnée écrite lorsque le fonctionnement du microcircuit est anormal comporte au moins un octet identique à la donnée qui serait écrite en cas de fonctionnement normal.

Cela s'applique notamment lorsque la donnée en question comporte au moins deux octets. Sinon, l'octet écrit peut être différent.

Ces dispositions ont chacune pour effet de rendre d'autant plus similaire la consommation de courant en cas de fonctionnement normal du circuit et en cas de fonctionnement anormal.

Ainsi, il est plus difficile pour un attaquant de différencier une écriture normale d'une écriture d'une donnée comprenant un identifiant de l'anomalie de fonctionnement.

Par exemple, de façon avantageuse, un seul octet de la donnée est substitué, de sorte à ce que tous les autres octets de la donnée sont identiques.

Dans un mode particulier de réalisation de l'invention, le procédé comprend:
- une étape de consultation de ladite zone de mémoire dédiée ; et
- lorsque ladite zone de mémoire dédiée comprend une donnée, une étape d'écriture, dans une zone sécuritaire du microcircuit, d'un identifiant de fonctionnement anormal compris dans la donnée.

Il s'agit ainsi d'extraire l'identifiant afin de le conserver dans une zone sécuritaire à même de gérer l'état de sécurité du microcircuit.

Préférentiellement, le ou les octets substitués sont situés en en-tête de la donnée. Cela permet de simplifier l'extraction de l'identifiant, sans forcément requérir la lecture de l'intégralité de la donnée.

Dans un mode particulier de réalisation de l'invention, le procédé comprend, suite à l'étape d'écriture dans la zone sécuritaire, une étape d'effacement de ladite donnée de la zone de mémoire dédiée.

On évite ainsi la réécriture ultérieure du même identifiant dans la zone sécuritaire, lors d'une consultation ultérieure de la mémoire dédiée.

Dans un mode particulier de réalisation de l'invention, le procédé comprend :
- une étape de consultation de ladite zone sécuritaire ; et
- lorsqu'une condition prédéterminée est vérifiée par le contenu de la zone sécuritaire, une étape de réalisation d'une fonction de protection.

Une telle condition consiste par exemple à comptabiliser un certain nombre d'anomalies de fonctionnement du microcircuit (en comptant par exemple le nombre d'identifiants présents dans la zone sécuritaire).

La condition peut également dépendre de la nature de l'anomalie (i.e. de l'identifiant lui-même).

Dans un mode particulier de réalisation de l'invention, la fonction de protection est une fonction de mise hors service du microcircuit.

Le microcircuit ne risque donc pas d'être davantage endommagé par injection de fautes d'un attaquant. Les données et programmes stockés dans le microcircuit sont également protégés puisque l'attaquant ne peut plus les récupérer.

Dans un mode particulier de réalisation de l'invention, l'étape de consultation de la zone de mémoire dédiée ou l'étape de consultation de la zone sécuritaire sont mises en œuvre au démarrage du microcircuit, périodiquement, ou lorsqu'un évènement prédéfini est détecté.

Par exemple, un tel évènement peut être qu'un compteur d'opérations atteint un seuil prédéterminé.

Dans un mode particulier de réalisation de l'invention, l'étape de vérification du fonctionnement normal du circuit comprend une étape de mesure d'au moins un paramètre de la liste suivante : température, tension d'alimentation, désadaptation *(glitches),* lumière, fréquence d'horloge.

Ainsi, lorsque la mesure d'un de ces paramètres présente une valeur anormale, la donnée écrite lors de l'écriture permet de garder une trace de ce paramètre. L'identifiant compris dans la donnée écrite peut permettre d'identifier précisément le paramètre dont la mesure révèle une anomalie.

Dans un mode particulier de réalisation de l'invention, l'étape de vérification du fonctionnement normal du circuit comprend une étape de comparaison des résultats de deux exécutions, ou une étape de vérification d'une relation entre deux variables de calcul, ou une étape de vérification d'une propriété d'une variable.

De même que précédemment, l'identifiant compris dans la donnée écrite en fonctionnement anormal peut permettre d'identifier la nature de l'erreur de fonctionnement.

Dans un mode particulier de réalisation, le procédé précité comprend:
- une autre étape de vérification du fonctionnement normal du microcircuit ;
- une autre étape d'écriture d'une autre donnée à une autre adresse ;
et lors de l'autre étape de vérification, si le microcircuit ne fonctionne pas normalement, une partie de l'autre donnée écrite en fonctionnement normal est substituée par un identifiant du fonctionnement anormal et l'autre adresse pointe vers ladite zone de mémoire dédiée.

Ainsi, si les écritures en fonctionnement normal peuvent se faire dans différentes zones de mémoire, l'écriture en fonctionnement anormal vise toujours la même zone de mémoire, à savoir la zone de mémoire dédiée (zone corbeille).

Selon une caractéristique de ce mode particulier, l'adresse d'écriture en fonctionnement anomal est différente de l'autre adresse d'écriture en fonctionnement anormal.

Grâce à cette caractéristique, il est possible de garder la trace de plusieurs anomalies de fonctionnement dans une zone dédiée.

Dans un mode particulier de réalisation, l'identifiant peut être retourné sur une interface d'entrées/sorties du microcircuit, lors de la mise sous tension du microcircuit ou en réponse à une commande reçue sur l'interface.

Dans un mode particulier de réalisation, les différentes étapes du procédé précité sont déterminées par des instructions de programmes d'ordinateurs.

En conséquence, l'invention vise aussi un programme d'ordinateur sur un support d'informations, ce programme étant susceptible d'être mis en œuvre par un microprocesseur, ce programme comprenant des instructions adaptées à la mise en œuvre des étapes du procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un microprocesseur, et comprenant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'informations peut être un circuit intégré dans lequel le programme est incorporé, le circuit étant adapté pour exécuter ou pour être utilisé dans l'exécution du procédé en question.

Le support d'informations et le programme d'ordinateur précités présentent des caractéristiques et avantages analogues au procédé qu'ils mettent en œuvre.

### BREVE DESCRIPTION DES FIGURES

D'autres particularités et avantages de l'invention apparaîtront encore dans la description ci-après, illustrée par les figures ci-jointes qui en illustrent des exemples de réalisation dépourvus de tout caractère limitatif. Sur les figures :
- la **Figure 1** représente schématiquement un dispositif conforme à un mode de réalisation particulier de l'invention,
- la **Figure 2** représente sous forme d'organigramme, les étapes générales d'un procédé selon l'invention,
- la **Figure 3** représente sous forme d'organigramme, les principales étapes d'un procédé selon un mode particulier de réalisation de l'invention,
- la **Figure 4** illustre schématiquement l'état des différentes zones de mémoire du microcircuit à l'issue des étapes du procédé de la Figure 3,
- la **Figure 5** représente sous forme de courbes un exemple de la signature en consommation d'un dispositif selon l'invention en cas d'attaque et en temps normal.

### DESCRIPTION DETAILLEE DE L'INVENTION

De façon générale, l'invention concerne la protection des microcircuits et des données stockées dans ceux-ci, notamment contre les attaques par fautes.

Conformément à la présente invention, lorsqu'une anomalie de fonctionnement, dont une des origines possibles est une attaque, est détectée, le microcircuit réalise une écriture de même qu'il aurait fait en fonctionnement normal, à ceci près que la donnée écrite comprend un identifiant du fonctionnement anormal, et l'écriture se fait à une adresse spécifique, pointant dans une zone dédiée de la mémoire (aussi appelée zone corbeille).

Ainsi un attaquant qui écouterait le microcircuit ne percevrait pas de différence flagrante au niveau de la consommation de courant par exemple, compte tenu du fait que dans tous les cas, une écriture est réalisée.

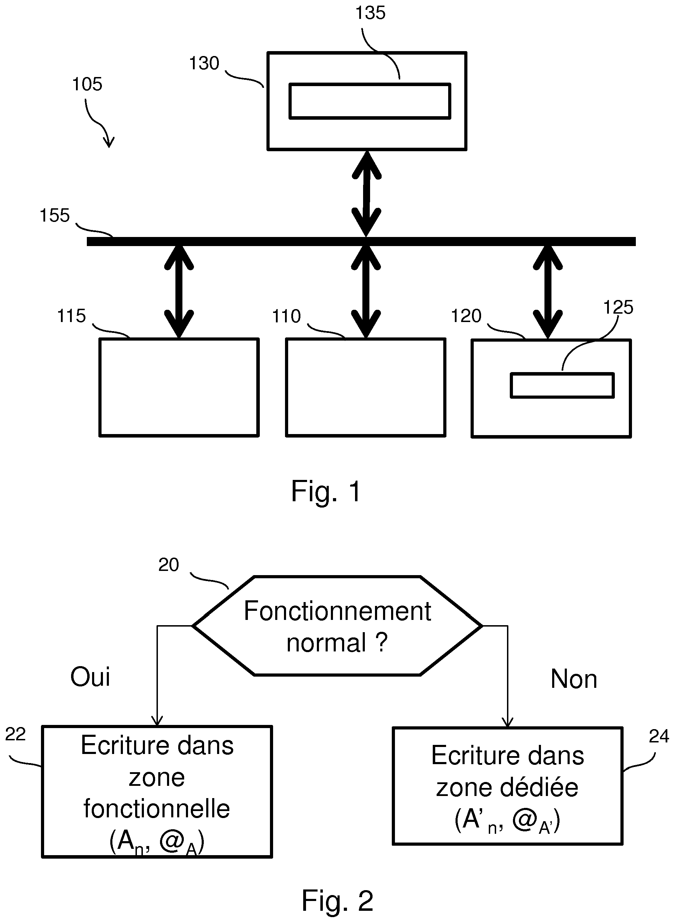

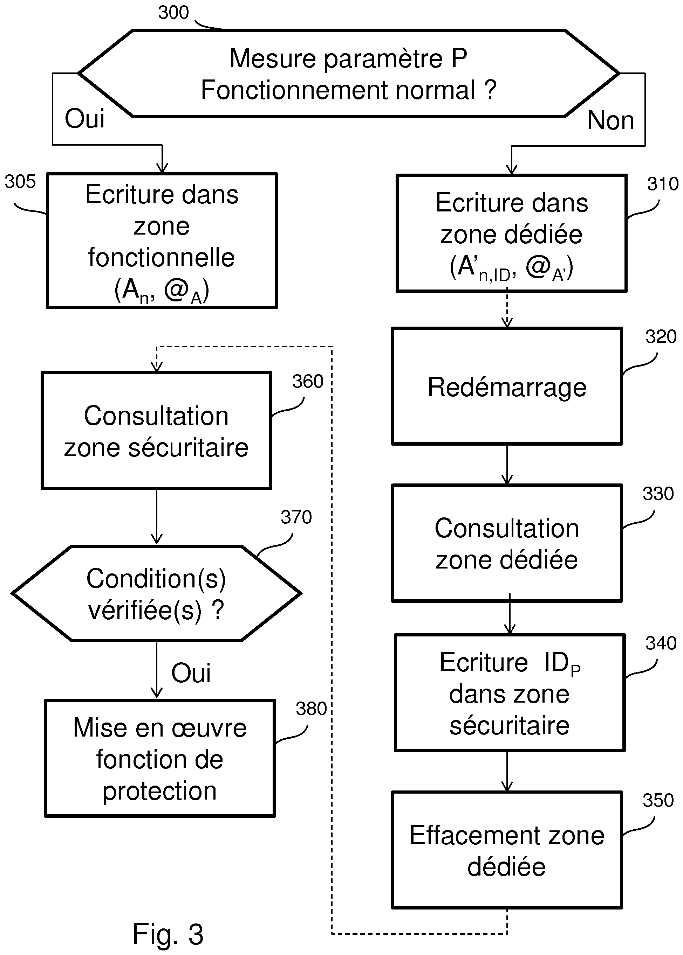

La **Figure 1** représente une carte à microcircuit 105 comportant les éléments suivants reliés entre eux par un bus 155 :
- un microprocesseur -ou unité de traitement- 110,
- des entrées/sorties 115,
- une ou plusieurs mémoires non volatile -ou mémoire morte- 120 par exemple ROM (acronyme de *Read Only Memory* en terminologie anglo-saxonne) stockant un système d'exploitation 125 et pouvant constituer un support au sens de l'invention, c'est-à-dire pouvant comprendre un programme informatique comprenant des instructions pour la mise en œuvre du procédé selon l'invention dont des exemples sont décrits ci-après en référence aux Figures 2 et 3 ; cette mémoire non volatile peut également être une mémoire EEPROM (acronyme de *Electrically Erasable Read Only Memory* en terminologie anglo-saxonne) ou encore une mémoire Flash;
- une mémoire vive 16 ou mémoire cache ou mémoire volatile par exemple RAM (acronyme de *Random Access Memory* en terminologie anglo-saxonne) comprenant des registres adaptés à l'enregistrement des variables et paramètres créés et modifiés au cours de l'exécution du programme précité ; lors de la mise en œuvre de l'invention. Les codes d'instructions du programme stocké en mémoire non volatile (ex. EEPROM ou flash) sont chargés en mémoire RAM en vue d'être exécutés par le microprocesseur 110 ;
- une mémoire non-volatile 130, par exemple une mémoire EEPROM ou non réinscriptible (OTP) ou Flash, comportant une matrice de mémoire 135 et directement contrôlée par le microprocesseur 110.

Dans un mode de réalisation particulier, un identifiant dont la lecture permet de repérer un fonctionnement anormal du microcircuit peut être retourné sur l'interface d'entrées/sorties 115, lors de la mise sous tension du microcircuit ou en réponse à une commande reçue sur cette interface 115, par exemple une commande APDU.

Dans son principe et tel qu'illustré sur la **Figure 2****,** un procédé selon l'invention comprend une étape de vérification (20) de l'état de fonctionnement du microcircuit.

En pratique cette étape consiste par exemple à mesurer un paramètre de fonctionnement du circuit afin de vérifier que sa valeur se situe dans une plage normale (c'est-à-dire caractéristique d'un fonctionnement normal du microcircuit) de valeurs.

Le ou les paramètres mesurés sont par exemple :
- la température (une surchauffe par exemple peut révéler une attaque),
- la tension d'alimentation (une surtension par exemple peut être causée par un attaquant),
- les *glitches,* qui sont des variations de tension brusques et courtes généralement non perceptible par une simple mesure de la tension d'alimentation,
- la lumière, permettant par exemple de détecter une attaque par laser,
- la fréquence d'horloge (une modification de la fréquence d'horloge, parfois utilisée comme signal de base pour les calculs, peut-être être le fruit d'une attaque par faute).

L'étape de vérification peut également consister par exemple à vérifier une somme de contrôle ou de vérification (ou *"Checksum"* selon la terminologie anglo-saxonne), c'est-à-dire à vérifier que des données inscrites en mémoire sont bien cohérentes avec la somme de vérification associée à ces données.

En outre, il est aussi possible de vérifier si une variable présente bien certaines propriétés (e.g. parité, valeur). Cette étape peut également être basée sur la comparaison des résultats obtenus par deux mises en œuvre d'un même algorithme.

Si l'étape de vérification (20) permet de conclure que le microcircuit fonctionne normalement, lorsque le processeur commande une écriture (22) d'une donnée Aₙ de n octets à l'adresse @_{A}, celle-ci est exécutée normalement à l'adresse indiquée correspondant à une cellule de mémoire, par exemple la mémoire non-volatile 130, éventuellement découpée en zones (e.g. zone fonctionnelle où sont classiquement écrites les données, zone sécuritaire).

Généralement, une telle écriture comporte un certain nombre d'étapes, classiquement :
- une étape d'effacement de la zone d'écriture fonctionnelle visée par l'adresse @_{A}, lorsque le type de mémoire le permet (en particulier, les mémoires de type OTP pour *One Time Programmable,* ne peuvent pas être effacées)
- une étape de détermination d'au moins une somme de vérification (*Checksum*) à partir de la donnée Aₙ qui doit être écrite,
- une étape d'écriture de la donnée Aₙ et de chaque somme de vérification déterminée lors de l'étape de détermination,
- une étape de relecture de la donnée écrite Aₙ et de chaque somme de vérification, et
- une étape de détermination de la validité des sommes de vérification en refaisant, sur les données lues, une détermination de chaque somme de vérification correspondante et en la comparant avec la somme de vérification lue.

Certaines de ces étapes peuvent éventuellement être omises pour une écriture plus rapide.

En revanche, si l'étape de vérification (20) révèle un disfonctionnement du microcircuit, lorsque le processeur commande une écriture d'une donnée Aₙ de n octets à l'adresse @_{A}, celle-ci est modifiée de façon à écrire (étape 24) une donnée A'ₙ comportant le même nombre n d'octets à l'adresse @_{A'}.

Bien entendu, l'écriture modifiée se déroule de manière strictement identique à une écriture normale dont les étapes classiques ont été décrites ci-avant. Par conséquent, cette écriture modifiée n'a pas d'impact supplémentaire sur le fonctionnement global du microcircuit, par rapport à une écriture normale. La modification concerne uniquement la nature de la donnée finalement écrite et l'adresse de l'écriture.

En particulier, la donnée A'ₙ est obtenue en substituant un nombre n' d'octet(s) de la donnée Aₙ par un identifiant (ou trace) dont la lecture permet de repérer un fonctionnement anormal du microcircuit.

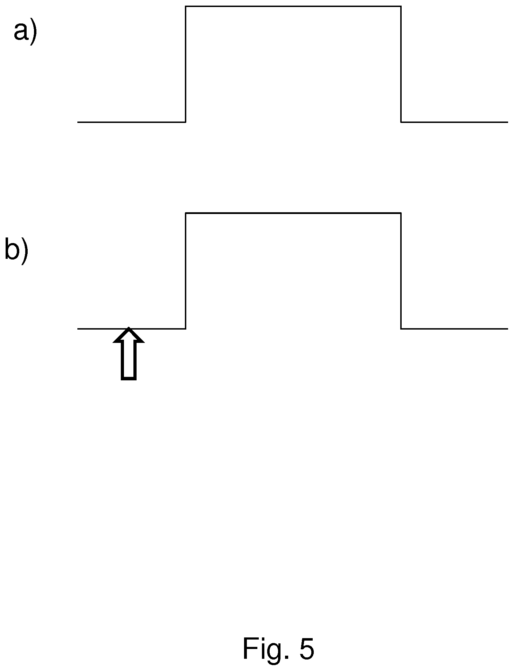

Par exemple, si la donnée Aₙ est constituée de 5 octets, la donnée A'ₙ peut être constituée d'un premier octet reflétant par exemple une anomalie de température et des 4 derniers octets de la donnée Aₙ. Ainsi, dans cet exemple, les données Aₙ et A'ₙ sont très proches en termes de contenu et font la même taille. Comme représenté sur la **Figure 5** où la **courbe a** est la consommation d'une écriture normale et la **courbe b** est la consommation d'une écriture modifiée (la flèche signale le moment de l'anomalie de fonctionnement), leurs signatures en termes de consommation seront donc très similaires, voir identiques, et un attaquant parviendra difficilement à détecter le fait que l'écriture a été modifiée.

De manière générale, plus les données Aₙ et A'ₙ auront d'octets en commun, plus leur écriture aura une signature similaire, et donc moins elles seront discernables pour l'attaquant.

L'écriture de la donnée A'ₙ permet en outre de garder une trace de l'anomalie de fonctionnement, grâce à l'identifiant qu'elle comprend, préférentiellement en en-tête afin de faciliter la reconnaissance de l'anomalie lors d'une lecture ultérieure de la donnée (ce cas sera décrit en détail en référence à la Figure 3).

Dans un mode de réalisation préféré, la donnée A'ₙ est écrite à une adresse @_{A'} pointant dans une zone spécifique de la mémoire, dédiée à stocker au moins temporairement les données lorsqu'une anomalie est détectée.

Ainsi, dans ce mode de réalisation, cette zone dédiée ne contient de données que lorsqu'un dysfonctionnement du microcircuit est détecté à l'étape 20.

Dans un mode de réalisation particulier, l'identifiant dont la lecture permet de repérer un fonctionnement anormal du microcircuit peut être retourné sur l'interface d'entrées/sorties 115 (voir Figure 1), lors de la mise sous tension du microcircuit ou en réponse à une commande reçue sur cette interface 115, par exemple une commande APDU.

La **Figure 3** représente les étapes d'un procédé selon un mode particulier de réalisation de l'invention. Ces étapes peuvent être mises en œuvre par un dispositif selon l'invention, par exemple dans le microcircuit 105 de la Figure 1.

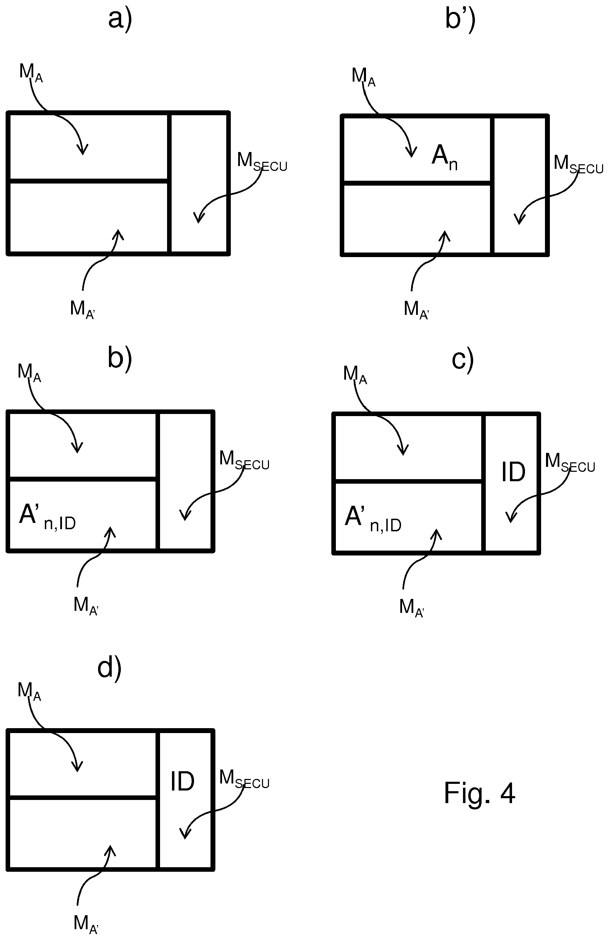

Des références sont faites à la **Figure 4** représentant l'état d'une mémoire du microcircuit (par exemple la mémoire non-volatile 130 comportant une matrice de mémoire 135), à différents stades du procédé. Dans cet exemple, les écritures fonctionnelles visent différentes zones de cette même mémoire, à savoir une zone d'écriture classique appelée zone fonctionnelle M_{A}, une zone dédiée M_{A'} au stockage des données en cas de dysfonctionnement du microcircuit, et une zone dite sécuritaire M_{SECU} où sont généralement répertoriés les traces d'anomalie dans l'état de l'art.

En variante, les écritures fonctionnelles pourraient viser différentes mémoires, préférentiellement de même type (e.g. OTP, EEPROM, Flash).

Dans cet exemple, on mesure (étape 300) un paramètre P du microcircuit. A ce stade, on considère que la mémoire est vide **(****Figure 4a****),** c'est-à-dire que les zones M_{A}, M_{A'} et M_{SECU} sont vides.

Si la valeur mesurée de ce paramètre P est située dans une plage de valeurs caractéristiques du fonctionnement normal du microcircuit, une écriture 305 (similaire à l'étape 22 de la Figure 2) de la donnée Aₙ à l'adresse @_{A} (pointant dans la zone fonctionnelle M_{A}) est exécutée normalement. A ce stade, comme représenté sur la **Figure 4b'****,** la zone fonctionnelle M_{A} contient donc la donnée Aₙ et les zones dédiée M_{A'} et sécuritaire M_{SECU} sont toujours vides.

Supposons maintenant que la valeur mesurée de ce paramètre P soit anormale, alors l'écriture est modifiée (étape 310 similaire à l'étape 24 de la Figure 2) afin qu'une donnée A'_{n,ID} comprenant un identifiant ID du fonctionnement anormal, par exemple identifiant le paramètre P témoignant de ce fonctionnement anormal, et comportant le même nombre n d'octets que la donnée écrite en temps normal Aₙ, soit écrite dans la zone dédiée M_{A'} à l'adresse @_{A'}.

En particulier, l'écriture est modifiée sous deux aspects :
- la nature de la donnée finalement écrite (mais le nombre d'octets reste identique), celle-ci correspond à la donnée à écrire en fonctionnement normale dans laquelle un nombre n' d'octet(s), préférentiellement en en-tête, a été substitué par un identifiant ID du type d'anomalie, ici le paramètre P, et
- l'adresse de l'écriture, préférentiellement dans une zone dédiée différente de la zone fonctionnelle (où les données sont écrites en fonctionnement normal).

Mis à part ces deux aspects, l'écriture modifiée se déroule de manière strictement identique à une écriture normale dont les étapes classiques ont été décrites précédemment.

Ainsi, comme représenté sur la **Figure 4b****,** à l'issue de l'étape 310, la zone dédiée M_{A'} comprend la donnée A'_{n,ID}, les zones M_{A} et M_{SECU} restant vides.

Après un certain temps, le microcircuit redémarre (étape 320). Ce redémarrage peut être provoqué par un utilisateur en coupant puis rétablissant l'alimentation de la carte à microcircuit par exemple. En variante, le microcircuit peut être redémarré périodiquement ou sous certaines conditions.

Au cours d'une étape 330 de consultation de la zone dédiée M_{A'}, la donnée A'_{n,ID} est lue et au cours d'une étape 340, l'identifiant ID qu'elle contient est écrit dans la zone de mémoire sécuritaire M_{SECU}.

De façon avantageuse, si l'identifiant est constitué par le ou les octet(s) en en-tête de la donnée, la lecture est facilité puisqu'il s'agit de lire simplement le ou les premiers octets de la donnée.

Le nombre d'octet(s) à lire peut par exemple être prédéterminé.

A ce stade, et comme représenté sur la **Figure 4c****,** la zone de mémoire dédiée M_{A'} comprend toujours la donnée A'_{n,ID} et la zone sécuritaire M_{SECU} comprend maintenant l'identifiant ID.

Cette étape de consultation 330 peut être en variante initiée après un laps de temps prédéterminé (par exemple périodiquement), sans redémarrage du terminal, ou bien sur détection d'un évènement particulier, par exemple la valeur d'un compteur ayant atteint un seuil prédéterminé.

Afin d'éviter que cet identifiant soit recopié une nouvelle fois dans la zone sécuritaire M_{SECU} lors d'une consultation ultérieure de la zone de mémoire dédiée M_{A'}, le contenu de la mémoire dédiée M_{A'} est effacé au cours d'une étape 350. La **Figure 4d** représente l'état de la mémoire après cet effacement.

Après un laps de temps prédéterminé, la zone de mémoire sécuritaire M_{SECU} est à son tour consultée (étape 360). En variante, la zone de mémoire sécuritaire M_{SECU} peut être consultée au démarrage du microcircuit, ou encore lorsqu'un évènement particulier est détecté.

On rappelle que dans notre exemple, la zone de mémoire sécuritaire M_{SECU} contient l'identifiant ID du paramètre P.

Lorsque le contenu de la zone sécuritaire M_{SECU} rempli certaines conditions (test 370), par exemple lorsqu'elle contient un nombre donné d'identifiants, ou bien lorsqu'elle comprend un identifiant spécifique, par exemple un identifiant du paramètre P, alors une fonction de protection est mise en œuvre.

Ainsi, une telle condition peut être du type 'si la tension d'alimentation est anormale, alors la fonction de protection est mise en œuvre' ou encore 'si au moins trois paramètres sont défaillants, alors la fonction de protection est mise en œuvre'.

Typiquement, cette fonction de protection peut être une fonction de mise hors service du microcircuit (e.g. fonction *Killcard*)*.*

En pratique, la mise en œuvre d'une telle fonction de protection consiste à mettre à une valeur prédéterminée un drapeau de destruction (*Killcard Flag*) ayant pour effet, lors de sa lecture par le microprocesseur, par exemple la destruction immédiate des données contenues dans le microcircuit, et/ou le blocage du fonctionnement de celui-ci.

Si ces conditions ne sont pas remplies à l'étape 370, alors la fonction de protection n'est pas réalisée.

Dans cet exemple de réalisation, le fonctionnement du circuit n'est vérifié qu'une seule fois. L'invention couvre cependant des modes dans lesquels plusieurs vérifications sont effectuées, et plusieurs étapes d'écritures sont réalisées. En particulier, si les écritures normales peuvent viser plusieurs zones de mémoire différentes et même plusieurs mémoires, les écritures en fonctionnement anormal visent toujours la zone dédiée, par exemple située à l'intérieur d'une seule page de mémoire.

Préférentiellement, lorsque plusieurs anomalies sont détectées avant que la zone dédiée ne soit consultée, les écritures des traces correspondantes sont réalisées à des adresses différentes de la zone dédiée, de sorte à ne pas substituer une trace par une autre. Ainsi, cela permet de garder une trace de toutes les anomalies détectées avant la consultation de la zone dédiée.

Dans un mode de réalisation particulier, l'identifiant dont la lecture permet de repérer un fonctionnement anormal du microcircuit peut être retourné sur l'interface d'entrées/sorties 115 (voir Figure 1), lors de la mise sous tension du microcircuit ou en réponse à une commande reçue sur cette interface 115, par exemple une commande APDU.

## Revendications

1. Procédé mis en œuvre dans un microcircuit, comprenant :
- une étape de vérification (20) du fonctionnement normal du microcircuit ; et
- en fonction du résultat de la vérification (20) :
- lorsque le fonctionnement du circuit est normal, une étape d'écriture (22) d'une première donnée à une première adresse (@_{A}) ;
- lorsque le fonctionnement du circuit est anormal, une étape d'écriture (24) d'une deuxième donnée à une seconde adresse (@_{A'}) ;
ledit procédé étant **caractérisé en ce que** ladite seconde adresse pointe vers une zone de mémoire dédiée (M_{A}') du microcircuit, et ladite deuxième donnée est obtenue en substituant une partie de ladite première donnée qui serait écrite en fonctionnement normal (Aₙ) par un identifiant (ID) du fonctionnement anormal.

2. Procédé selon la revendication 1, **caractérisé en ce qu'**il comprend :
- une autre étape de vérification du fonctionnement normal du microcircuit ;
- lorsque le fonctionnement du circuit est normal, une étape d'écriture d'une troisième donnée à une troisième adresse ;
et lors de l'autre étape de vérification, si le microcircuit ne fonctionne pas normalement, le procédé comprend une étape d'écriture d'une quatrième donnée à une quatrième adresse pointant vers ladite zone de mémoire dédiée, ladite quatrième donnée étant obtenue en substituant une partie de la troisième donnée qui serait écrite en fonctionnement normal par un identifiant du fonctionnement anormal.

3. Procédé selon la revendication 2, **caractérisé en ce que** la deuxième adresse d'écriture en fonctionnement anormal est différente de la quatrième adresse d'écriture en fonctionnement anormal.

4. Procédé selon l'une quelconque des revendications 1 à 3, **caractérisé en ce que** ledit identifiant (ID) permet d'identifier un type d'anomalie.

5. Procédé selon l'une quelconque des revendications 1 à 4, **caractérisé en ce que** la deuxième donnée écrite (A'ₙ) lorsque le fonctionnement du microcircuit est anormal comporte au moins un octet identique à la première donnée (Aₙ) qui serait écrite en cas de fonctionnement normal.

6. Procédé selon l'une quelconque des revendications 1 à 5, **caractérisé en ce que** si le microcircuit fonctionne normalement, ladite première adresse pointe vers une zone de mémoire dite fonctionnelle (M_{A}), différente de ladite zone de mémoire dédiée (M_{A'}).

7. Procédé selon l'une quelconque des revendications 1 à 6, **caractérisé en ce qu'**il comprend:
- une étape de consultation (330) de ladite zone de mémoire dédiée (M_{A'}); et
- lorsque ladite zone de mémoire dédiée (M_{A}') comprend une donnée (A'ₙ), une étape d'écriture (340), dans une zone sécuritaire (M_{SECU}) du microcircuit, d'un identifiant (ID_{P}) de fonctionnement anormal compris dans la donnée.

8. Procédé selon la revendication 7, **caractérisé en ce qu'**il comprend, suite à l'étape d'écriture (340) dans la zone sécuritaire, une étape d'effacement (350) de ladite donnée de la zone de mémoire dédiée.

9. Procédé selon l'une quelconque des revendications 7 à 8, **caractérisé en ce qu'**il comprend:
- une étape de consultation (360) de ladite zone sécuritaire ; et
- lorsqu'une condition prédéterminée est vérifiée par le contenu de la zone sécuritaire, une étape de réalisation (380) d'une fonction de protection.

10. Procédé selon la revendication 9, **caractérisé en ce que** la fonction de protection est une fonction de mise hors service du microcircuit.

11. Procédé selon l'une quelconque des revendications 7 à 10, **caractérisé en ce que** l'étape de consultation (330) de la zone de mémoire dédiée ou l'étape de consultation (360) de la zone sécuritaire sont mises en œuvre au démarrage du microcircuit, périodiquement, ou lorsqu'un événement prédéfini est détecté.

12. Procédé selon l'une quelconque des revendications 1 à 11, **caractérisé en ce que** l'étape de vérification du fonctionnement normal du circuit comprend une étape de mesure (300) d'au moins un paramètre de la liste suivante : température, tension d'alimentation, désadaptation *(glitches),* lumière, fréquence d'horloge.

13. Procédé selon l'une quelconque des revendications 1 à 12, **caractérisé en ce que** l'étape de vérification (20) du fonctionnement normal du circuit comprend une étape de comparaison des résultats de deux exécutions, ou une étape de vérification d'une relation entre deux variables de calcul, ou une étape de vérification d'une propriété d'une variable.

14. Dispositif (105) dans un microcircuit, comprenant :
- un module de vérification du fonctionnement normal du microcircuit ;
- un module d'écriture configuré pour, en fonction du résultat de la vérification par le module de vérification, écrire une première donnée à une première adresse lorsque le fonctionnement du circuit est normal, et écrire une deuxième donnée à une seconde adresse lorsque le fonctionnement du circuit est anormal ; ledit dispositif étant **caractérisé en ce que** ladite seconde adresse pointe vers une zone de mémoire dédiée (M_{A}') du microcircuit, et ladite deuxième donnée est obtenue en substituant une partie de ladite première donnée qui serait écrite en fonctionnement normal par un identifiant du fonctionnement anormal.

15. Dispositif selon la revendication 14, **caractérisé en ce que** la zone de mémoire dédiée et la zone de mémoire en fonctionnement normal dite fonctionnelle appartiennent à des mémoires de même type.

16. Dispositif selon l'une quelconque des revendications 14 à 15, **caractérisé en ce que** le module de vérification du fonctionnement normal du circuit comprend un module de mesure d'au moins un paramètre de la liste suivante : température, tension d'alimentation, désadaptation *(glitches),* lumière, fréquence d'horloge.

17. Dispositif selon l'une quelconque des revendications 14 à 16, **caractérisé en ce que** le module de vérification du fonctionnement normal du circuit comprend en outre un module de comparaison des résultats de deux exécutions, ou un module de vérification d'une relation entre deux variables de calcul, ou un module de vérification d'une propriété d'une variable.

18. Programme d'ordinateur comprenant des instructions pour la mise en œuvre d'un procédé selon l'une quelconque des revendications 1 à 13, lorsqu'il est chargé et exécuté par un microprocesseur.

19. Support d'informations lisible par un microprocesseur, comprenant les instructions d'un programme d'ordinateur pour mettre en œuvre un procédé selon l'une quelconque des revendications 1 à 13.

## Patentansprüche

1. Verfahren, das in einem Mikroschaltkreis durchgeführt wird, umfassend:
- einen Schritt des Überprüfens (20) der normalen Funktionsweise des Mikroschaltkreises; und
- in Abhängigkeit vom Ergebnis der Überprüfung (20):
- wenn die Funktionsweise des Schaltkreises normal ist, einen Schritt des Schreibens (22) einer ersten Angabe an einer ersten Adresse (@_{A});
- wenn die Funktionsweise des Schaltkreises anormal ist, einen Schritt des Schreibens (24) einer zweiten Angabe an einer zweiten Adresse (@_{A'});
wobei das Verfahren **dadurch gekennzeichnet ist, dass** die zweite Adresse zu einer speziellen Speicherzone (M_{A'}) des Mikroschaltkreises gerichtet ist und die zweite Angabe durch Substitution eines Teils der ersten Angabe erhalten wird, die bei normaler Funktionsweise (Aₙ) von einer Kennung (ID) der anormalen Funktionsweise geschrieben werden würde.

2. Verfahren nach Anspruch 1, **dadurch gekennzeichnet, dass** es umfasst:
- einen anderen Schritt des Überprüfens der normalen Funktionsweise des Mikroschaltkreises;
- wenn die Funktionsweise des Schaltkreises normal ist, einen Schritt des Schreibens einer dritten Angabe an einer dritten Adresse;
und beim anderen Schritt des Überprüfens, wenn der Mikroschaltkreis nicht normal funktioniert, umfasst das Verfahren einen Schritt des Schreibens einer vierten Angabe an einer vierten Adresse, die zu der speziellen Speicherzone gerichtet ist, wobei die vierte Angabe durch Substitution eines Teils der dritten Angabe erhalten wird, die bei normaler Funktionsweise von einer Kennung der anormalen Funktionsweise geschrieben werden würde.

3. Verfahren nach Anspruch 2, **dadurch gekennzeichnet, dass** sich die zweite Adresse des Schreibens bei anormaler Funktionsweise von der vierten Adresse des Schreibens bei anormaler Funktionsweise unterscheidet.

4. Verfahren nach einem der Ansprüche 1 bis 3, **dadurch gekennzeichnet, dass** die Kennung (ID) erlaubt, einen Anomalietyp zu identifizieren.

5. Verfahren nach einem der Ansprüche 1 bis 4, **dadurch gekennzeichnet, dass** die zweite geschriebene Angabe (A'ₙ), wenn die Funktionsweise des Mikroschaltkreises anormal ist, mindestens ein Byte aufweist, das mit der ersten Angabe (Aₙ) identisch ist, die bei normaler Funktionsweise geschrieben werden würde.

6. Verfahren nach einem der Ansprüche 1 bis 5, **dadurch gekennzeichnet, dass**, wenn der Mikroschaltkreis normal funktioniert, die erste Adresse zu einer funktionellen Speicherzone (M_{A}) gerichtet ist, die sich von der speziellen Speicherzone (M_{A'}) unterscheidet.

7. Verfahren nach einem der Ansprüche 1 bis 6, **dadurch gekennzeichnet, dass** es umfasst:
- einen Schritt des Konsultierens (330) der speziellen Speicherzone (M_{A'}); und
- wenn die spezielle Speicherzone (M_{A'}) eine Angabe (A'ₙ) umfasst, einen Schritt des Schreibens (340), in einer Sicherheitszone (M_{SECU}) des Mikroschaltkreises, einer Kennung (ID_{P}) einer anormalen Funktionsweise, die in der Angabe enthalten ist.

8. Verfahren nach Anspruch 7, **dadurch gekennzeichnet, dass** es nach dem Schritt des Schreibens (340) in der Sicherheitszone einen Schritt des Löschens (350) der Angabe aus der speziellen Speicherzone umfasst.

9. Verfahren nach einem der Ansprüche 7 bis 8, **dadurch gekennzeichnet, dass** es umfasst:
- einen Schritt des Konsultierens (360) der Sicherheitszone; und
- wenn eine vorher festgelegte Bedingung durch den Inhalt der Sicherheitszone überprüft ist, einen Schritt des Durchführens (380) einer Schutzfunktion.

10. Verfahren nach Anspruch 9, **dadurch gekennzeichnet, dass** die Schutzfunktion eine Abschaltung des Mikroschaltkreises ist.

11. Verfahren nach einem der Ansprüche 7 bis 10, **dadurch gekennzeichnet, dass** der Schritt des Konsultierens (330) der speziellen Speicherzone oder der Schritt des Konsultierens (360) der Sicherheitszone beim Starten des Mikroschaltkreises, periodisch oder wenn ein vorher definiertes Ereignis festgestellt wird, durchgeführt werden.

12. Verfahren nach einem der Ansprüche 1 bis 11, **dadurch gekennzeichnet, dass** der Schritt des Überprüfens der normalen Funktionsweise des Schaltkreises einen Schritt des Messens (300) mindestens eines Parameters aus der folgenden Liste umfasst: Temperatur, Versorgungsspannung, Fehlanpassung *(glitches),* Licht, Taktfrequenz.

13. Verfahren nach einem der Ansprüche 1 bis 12, **dadurch gekennzeichnet, dass** der Schritt des Überprüfens (20) der normalen Funktionsweise des Schaltkreises einen Schritt des Vergleichens der Ergebnisse von zwei Ausführungen oder einen Schritt des Überprüfens einer Beziehung zwischen zwei Berechnungsvariablen oder einen Schritt des Überprüfens einer Eigenschaft einer Variablen umfasst.

14. Vorrichtung (105) in einem Mikroschaltkreis, umfassend:
- ein Modul zum Überprüfen der normalen Funktionsweise des Mikroschaltkreises;
- ein Modul zum Schreiben, das ausgelegt ist, um in Abhängigkeit vom Ergebnis der Überprüfung durch das Modul zum Überprüfen eine erste Angabe an einer ersten Adresse zu schreiben, wenn die Funktionsweise des Schaltkreises normal ist, und eine zweite Angabe an einer zweiten Adresse zu schreiben, wenn die Funktionsweise des Schaltkreises anormal ist;
wobei die Vorrichtung **dadurch gekennzeichnet ist, dass** die zweite Adresse zu einer speziellen Speicherzone (M_{A'}) des Mikroschaltkreises gerichtet ist und die zweite Angabe durch Substitution eines Teils der ersten Angabe erhalten wird, die bei normaler Funktionsweise von einer Kennung der anormalen Funktionsweise geschrieben werden würde.

15. Vorrichtung nach Anspruch 14, **dadurch gekennzeichnet, dass** die spezielle Speicherzone und die bei normaler Funktionsweise als funktionell bezeichnete Speicherzone zu Speichern desselben Typs gehören.

16. Vorrichtung nach einem der Ansprüche 14 bis 15, **dadurch gekennzeichnet, dass** das Modul zum Überprüfen der normalen Funktionsweise des Schaltkreises ein Modul zum Messen mindestens eines Parameters aus der folgenden Liste umfasst: Temperatur, Versorgungsspannung, Fehlanpassung *(glitches),* Licht, Taktfrequenz.

17. Vorrichtung nach einem der Ansprüche 14 bis 16, **dadurch gekennzeichnet, dass** das Modul zum Überprüfen der normalen Funktionsweise des Schaltkreises ferner ein Modul zum Vergleichen der Ergebnisse von zwei Ausführungen oder ein Modul zum Überprüfen einer Beziehung zwischen zwei Berechnungsvariablen oder ein Modul zum Überprüfen einer Eigenschaft einer Variablen umfasst.

18. Rechnerprogramm, umfassend Instruktionen für die Durchführung eines Verfahrens nach einem der Ansprüche 1 bis 13, wenn es von einem Mikroprozessor geladen ist und ausgeführt wird.

19. Informationsträger, der von einem Mikroprozessor lesbar ist, umfassend Instruktionen eines Rechnerprogramms zur Durchführung eines Verfahrens nach einem der Ansprüche 1 bis 13.

## Claims

1. A method implemented in a microcircuit, comprising:
- a step of checking (20) the normal operation of the microcircuit; and
- depending on the result of the checking (20):
- when the operation of the circuit is normal, a step of writing (22) a first data at a first address (@_{A}) ;
- when the operation of the circuit is abnormal, a step of writing (24) a second data at a second address (@_{A'});
said method being **characterized in that** said second address points to a dedicated memory area (M_{A}') of the microcircuit, and said second data is obtained by substituting part of said first data which would be written in normal operation (Aₙ) by an identifier (ID) of the abnormal operation.

2. The method according to claim 1, **characterized in that** it comprises:
- another step of checking the normal operation of the microcircuit;
- when the operation of the circuit is normal, a step of writing a third data at a third address;
and during the other checking step, if the microcircuit does not work normally, the method comprises a step of writing a fourth data at a fourth address pointing to said dedicated memory area, said fourth data being obtained by substituting part of the third data which would be written in normal operation by an identifier of the abnormal operation.

3. The method according to claim 2, **characterized in that** the second write address in abnormal operation is different from the fourth write address in abnormal operation.

4. The method according to any one of claims 1 to 3, **characterized in that** said identifier (ID) allows identifying a type of anomaly.

5. The method according to any one of claims 1 to 4, **characterized in that** the second written data (A'ₙ) when the operation of the microcircuit is abnormal includes at least one byte identical to the first data (Aₙ) that would be written in normal operation.

6. The method according to any one of claims 1 to 5, **characterized in that** if the microcircuit is operating normally, said first address points to a memory area called operating memory area (M_{A}), different from said dedicated memory area (M_{A}').

7. The method according to any one of claims 1 to 6, **characterized in that** it comprises:
- a step of consulting (330) said dedicated memory area (M_{A'}); and
- when said dedicated memory area (M_{A}') comprises a data (A'ₙ), a step of writing (340), in a secure area (M_{SECU}) of the microcircuit, an abnormal operation identifier (ID_{P}) comprised in the data.

8. The method according to claim 7, **characterized in that** it comprises, following the step of writing (340), in the secure area, a step of deleting (350) said data from the dedicated memory area.

9. The method according to any one of claims 7 to 8, **characterized in that** it comprises:
- a step of consulting (360) said secure area; and
- when a predetermined condition is checked by the content of the secure area, a step of achieving (380) a protect function.

10. The method according to claim 9, **characterized in that** the protect function is a function of disablement of the microcircuit.

11. The method according to any one of claims 7 to 10, **characterized in that** the step of consulting (330) the dedicated memory area or the step of consulting (360) the secure area are implemented at the start of the microcircuit, periodically, or when a predefined event is detected.

12. The method according to any one of claims 1 to 11, **characterized in that** the step of checking the normal operation of the circuit comprises a step of measuring (300) at least one parameter from the following list: temperature, supply voltage, glitches, light, clock frequency.

13. The method according to any one of claims 1 to 12, **characterized in that** the step of checking (20) the normal operation of the circuit comprises a step of comparing the results of two executions, or a step of checking a relation between two calculation variables, or a step of checking a property of a variable.

14. A device (105) in a microcircuit, comprising:
- a module for checking the normal operation of the microcircuit;
- a write module configured to write, depending on the result of the checking by the checking module, a first data at a first address when the operation of the circuit is normal, and write a second data at a second address when the operation of the circuit is abnormal;
said device being **characterized in that**, said second address points to a dedicated memory area (M_{A}') of the microcircuit, and said second data is obtained by substituting part of said first data that would be written in normal operation by an identifier of the abnormal operation.

15. The device according to claim 14, **characterized in that** the dedicated memory area and the memory area in normal operation called operating memory area belong to memories of the same type.

16. The device according to any one of claims 14 to 15, **characterized in that** the module for checking the normal operation of the circuit comprises a module for measuring at least one parameter from the following list: temperature, supply voltage, glitches, light, clock frequency.

17. The device according to any one of claims 14 to 16, **characterized in that** the module for checking the normal operation of the circuit further comprises a module for comparing the results of two executions, or a module for checking a relationship between two calculation variables, or a module for checking a property of a variable.

18. A computer program including instructions for the implementation of a method according to any one of claims 1 to 13, when it is loaded and executed by a microprocessor.

19. An information medium readable by a microprocessor, comprising the instructions of a computer program to implement a method according to any one of claims 1 to 13.
